# EUROPÄISCHE PATENTSCHRIFT

(11) **EP 3 305 657 B1**
(45) Veröffentlichungstag und Bekanntmachung des Hinweises auf die Patenterteilung: **23.01.2019**
(21) Anmeldenummer: 17155016.3
(22) Anmeldetag: 07.02.2017
(51) Int. Cl.: B64C 11/32, B64C 11/44, B64C 11/06

(54) **ELEKTRISCHE VERSTELLPROPELLER-ANORDNUNG**
ELECTRICAL ADJUSTMENT PROPELLER ARRANGEMENT
SYSTÈME D'HÉLICE ÉLECTRIQUE À PAS VARIABLE

(30) Priorität: 05.10.2016 DE 102016118822
(43) Veröffentlichungstag der Anmeldung: 11.04.2018
(73) Patentinhaber: MT-Propeller Entwicklung GmbH, 94348 Atting (DE)
(72) Erfinder: Albrecht, Martin, 94363 Oberschneiding (DE); Mühlbauer, Gerd, 94360 Mitterfels (DE)
(74) Vertreter: advotec.

(56) Entgegenhaltungen:
- DE-A1- 19 615 046
- DE-C- 712 882
- US-A- 2 124 078
- US-A- 3 061 017
- US-A- 4 556 366

## Beschreibung

Die Erfindung betrifft eine elektrische Verstellpropeller-Anordnung für ein Luft-, Land- oder Wasserfahrzeug.

Eine elektrische Verstellpropeller-Anordnung ist aus der Druckschrift DE 196 15 046 C2 bekannt und dient zum Antrieb eines Flugzeugs. Diese elektrische Verstellpropeller-Anordnung umfasst mehrere Propellerblätter, die zur Einstellung eines Anstellwinkels im Bereich einer Propellernabe drehbar gelagert sind. Der Anstellwinkel der Propellerblätter ist in Abhängigkeit von der jeweiligen Betriebssituation des Flugzeugs anpassbar. Hierzu ist als Antriebsvorrichtung für die Anstellwinkel- bzw. Blattwinkeleinstellung unter anderem ein elektrischer Servomotor vorgesehen, der eine Differentialgewindespindel antreibt, welche zur Verstellung der Anstellwinkel bzw. Blattwinkel mit korrespondierenden Gegenstücken der Propellerblätter in deren Blattwurzeln in Eingriff steht. Mittels dieser Verstellvorrichtung lässt sich der Anstellwinkel der Propellerblätter nur mit hohen Verstellkräften bei niedrigen Verstellgeschwindigkeiten verstellen.

Dokument US4556366 offenbart eine elektrische Verstellung des Anstellwinkels, wobei eine Kegelradanordnung benutzt wird.

Der Erfindung liegt die Aufgabe zugrunde, eine elektrische Verstellpropeller-Anordnung bereitzustellen, bei der gegenüber dem Stand der Technik erhöhte Verstellgeschwindigkeiten für die Propellerblätter bereitgestellt werden können und bei dem die zum Verstellen des Anstellwinkels der Propellerblätter erforderlichen Kräfte gering gehalten werden können.

Diese Aufgabe ist erfindungsgemäß durch die elektrische Verstellpropeller-Anordnung mit den Merkmalen des Patentanspruches 1 gelöst.

Gemäß der Erfindung wird also eine elektrische Verstellpropeller-Anordnung für ein Luft-, Land- oder Wasserfahrzeug bereitgestellt, die mindestens zwei Propellerblätter umfasst, die zur Einstellung eines Anstellwinkels im Bereich einer Propellernabe drehbar gelagert sind und mittels eines an der Propellernabe angeordneten Elektromotors hinsichtlich ihres Anstellwinkels gegenüber einer rechtwinklig zur Propellerachse stehenden Radialebene verstellbar sind. Der Elektromotor ist über eine Kegelradanordnung mit den Propellerblättern gekoppelt und mit einem elektronischen Steuergerät verbunden, das zumindest in einem Betriebsmodus in Abhängigkeit von einer Leistung eines Fahrzeug- bzw. Flugzeugantriebsmotors und/oder von einem Flugzustand den Elektromotor steuert. Um den minimalen Anstellwinkel und den maximalen Anstellwinkel der Propellerblätter zu definieren, ist die Kegelradanordnung mit mindestens einem mechanischen Endanschlag versehen.

Der Kern der Erfindung liegt mithin darin, durch das Kegelradgetriebe zwischen dem Elektromotor und den Propellerblättern eine gleichbleibend schnelle und mit geringen Verstellkräften ausführbare Verstellung der Anstellwinkel der Propellerblätter auszuführen. Damit ist es möglich, den Elektromotor vergleichsweise klein zu dimensionieren, was sich wiederum positiv auf das Gesamtgewicht der Verstellpropeller-Anordnung auswirkt. Zudem wird durch den mindestens einen mechanischen Anschlag für einen minimalen oder einen maximalen Anstellwinkel der Propellerblätter mittels einfach konstruktiver Mittel eine Betriebssicherheit erhöht.

Zur Optimierung der Verstellkräfte und Verstellgeschwindigkeiten ist bei einer vorteilhaften Ausführungsform der elektrischen Verstellpropeller-Anordnung nach der Erfindung der Kegelradanordnung ein Planetenradgetriebe vorgeschaltet. Das Planetenradgetriebe ist zweckmäßigerweise direkt mit der Antriebswelle des Elektromotors verbunden.

Um Gewicht und Bauraum einzusparen, ist bei einer speziellen Ausführungsform der elektrischen Verstellpropeller-Anordnung nach der Erfindung an jedem Propellerblatt, insbesondere an Blattwurzeln der Propellerblätter, jeweils ein Kegelradsegment der Kegelradanordnung angeordnet, das mit einem Antriebskegelrad in Eingriff steht, das von dem Elektromotor angetrieben ist. Die Kegelradsegmente decken damit vorzugsweise gerade den Winkelbereich ab, über den eine Verstellung der Anstellwinkel der Propellerblätter erforderlich ist. Das Antriebskegelrad treibt die Propellerblätter bei deren Verstellung gemeinsam an, d. h. es steht mit den Kegelradsegmenten aller Propellerblätter in Eingriff.

Das elektronische Steuergerät der elektrischen Verstellpropeller-Anordnung nach der Erfindung, das insbesondere vom Piloten des betreffenden Fahrzeugs bzw. Flugzeugs bedient wird und mit einem geeigneten Mikroprozessor versehen ist, kann zweckmäßigerweise in weitere Betriebsmodi verstellbar sein. In einem Betriebsmodus kann vorgesehen sein, dass eine manuelle Einstellung des Anstellwinkels der Propellerblätter erfolgt. Ein anderer Betriebsmodus kann darin bestehen, dass der Anstellwinkel der Propellerblätter einer Bremsstellung (Reverse) entspricht, die insbesondere zur Verkürzung der Landestrecke eines einmotorigen oder mehrmotorigen Flugzeugs dient. Zudem kann vorgesehen sein, dass das elektronische Steuergerät in einen Betriebsmodus verstellbar ist, in dem der Anstellwinkel der Propellerblätter gegenüber der Radialebene einer Startstellung entspricht, d. h. ein kleiner Anstellwinkel mittels des Elektromotors eingestellt wird. Ein weiterer Betriebsmodus des elektronischen Steuergeräts kann darin bestehen, dass der Anstellwinkel der Propellerblätter gegenüber der Radialebene einer Segelstellung (Feathering) entspricht. In der Segelstellung haben die Propellerblätter einen maximalen Anstellwinkel, d. h. die Ebene der Propellerblätter ist dann vorzugsweise im Wesentlichen parallel zur Drehachse des Propellers ausgerichtet.

Der Elektromotor, der an der Propellernabe angeordnet ist, ist optional mit mindestens zwei verschiedenen Geschwindigkeiten betreibbar, beispielsweise mit einer Geschwindigkeit zum Einstellen der Segelstellung und mit einer Geschwindigkeit zum Einstellen der Bremsstellung.

Das Planetenradgetriebe kann eine Untersetzung von etwa 1:500 bis 1:1500, insbesondere von 1:1000, haben, damit im Normalbetrieb bei mehrmotorigen Flugzeugen eine Synchronisierung zuverlässig und schnell möglich ist und damit eine vorgewählte Drehzahl des Propellers präzise eingehalten werden kann, und zwar mit einer Abweichung von weniger als +/-25 UPM.

Des Weiteren kann der Elektromotor, der zum Verstellen des Anstellwinkels der Propellerblätter dient, eine Motorbremse aufweisen oder mit einer Selbsthemmung versehen sein, damit sich der Anstellwinkel der Propellerblätter durch die im Betrieb auftretenden Fliehkräfte nicht in ungewollter Weise selbst verstellt.

Eine weitere spezielle Ausführungsform der elektrischen Verstellpropeller-Anordnung nach der Erfindung umfasst eine kontaktlose Stellungsanzeige, wobei der Anstellwinkel bzw. Blattwinkel in der jeweils gewählten Stellung vorzugsweise blockiert ist, beispielsweise durch die Selbsthemmung oder die Motorbremse des Elektromotors

Insbesondere kann noch eine weitere mechanische Sicherung vorgesehen sein, die ein unbeabsichtigtes oder die Sicherheit beeinträchtigendes Verstellen der Propellerblätter in deren Bremsstellung verhindert. Diese ist beispielsweise von einem fliehkraftabhängigen mechanischen und/oder einem elektro-mechanischen Sicherheitsanschlag gebildet, der oberhalb einer bestimmten Propellerdrehzahl oder/oder in einem bestimmten Flugzustand aktiviert wird und das Verstellen der Propellerblätter in die Bremsstellung verhindert.

Zur Ansteuerung des Elektromotors mittels des elektronischen Steuergeräts ist bei einer zweckmäßigen Ausführungsform der elektrischen Verstellpropeller-Anordnung nach der Erfindung eine Schleifringanordnung vorgesehen, über die der Elektromotor mit dem elektronischen Steuergerät kontaktiert ist.

Bei einer alternativen Ausführungsform der elektrischen Verstellpropeller-Anordnung nach der Erfindung ist eine kontaktlose Signalübertragungseinrichtung vorgesehen, die den Elektromotor mit dem elektronischen Steuergerät verbindet. Die kontaktlose Signalübertragungseinrichtung arbeitet insbesondere induktiv, d. h. sie umfasst vorzugsweise eine Induktionsspule, über die die Steuersignale bei sich drehendem Propel ler aufgenommen werden können. Solche kontaktlose Signalübertragungseinrichtungen sind auch denkbar bei Verstellpropellern, bei denen die Verstellung der Anstellwinkel der Propellerblätter nicht mittels eines Kegelradgetriebes, sondern mittels eines anderen Getriebes, beispielsweise mittels einer Kugelumlaufspindel oder dergleichen erfolgt.

Weitere Vorteile und vorteilhafte Ausgestaltungen des Gegenstandes der Erfindung sind der Beschreibung, der Zeichnung und den Patentansprüchen entnehmbar.

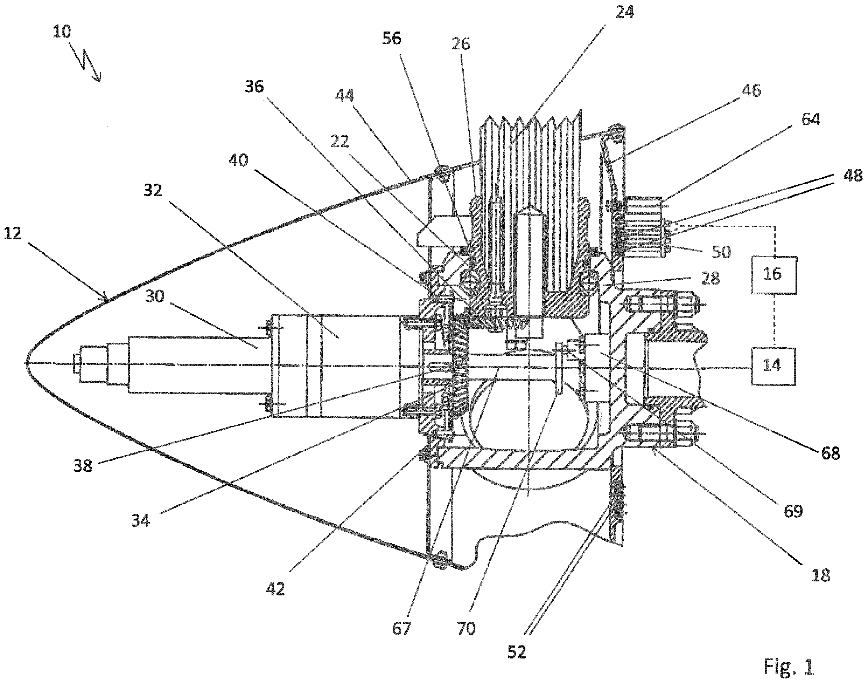

Ein Ausführungsbeispiel einer elektrischen Verstellpropeller-Anordnung nach der Erfindung ist in der Zeichnung schematisch vereinfacht dargestellt und wird in der nachfolgenden Beschreibung näher erläutert. Es zeigt
- Fig. 1: einen Längsschnitt durch einen Propeller einer Verstellpropeller-Anordnung nach der Erfindung; und

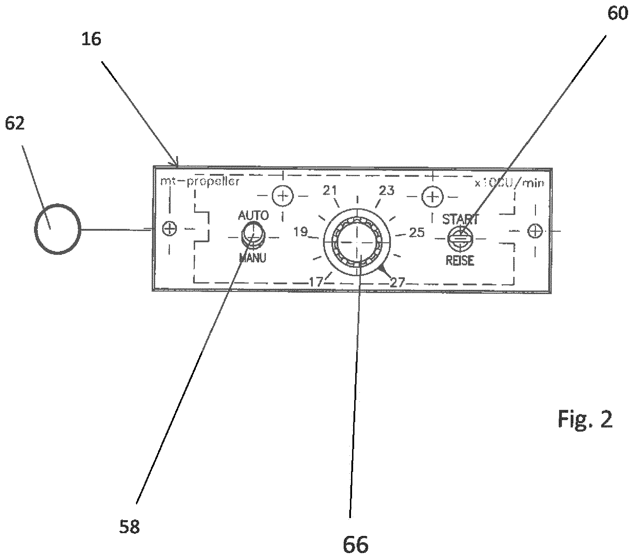

- Fig. 2: ein elektronisches Steuergerät der Verstellpropeller-Anordnung.

In der Zeichnung ist eine verstellbare Verstellpropeller-Anordnung 10 dargestellt, die unter anderem einen Propeller 12, einen Antriebsmotor 14 zum rotatorischen Antrieb des Propellers 12 und ein elektronisches Steuergerät 16 umfasst.

Der Propeller 12 umfasst eine Propellernabe 18, die über ein Lager drehbar gelagert ist und mit einer Antriebswelle des Antriebsmotors 14 verbunden ist. Die Propellernabe 18 hat an ihrem Umfang Ausnehmungen 22, in denen jeweils ein Propellerblatt 24, das mit einer eine Blattwurzel darstellenden Lagerschale 26 versehen ist, drehbar gelagert, so dass der Anstellwinkel bzw. Blattwinkel des jeweiligen Propellerblatts 24 einstellbar ist. Die Lagerung der Lagerschale 26 an der Propellernabe 18 erfolgt über ein Kugellager 28.

Der vorliegend dargestellte Propeller 12 umfasst drei Propellerblätter 24, die über den Umfang der Propellernabe 18 im Abstand von 120° angeordnet sind.

An der Propellernabe 18 ist an der in Flugrichtung des betreffenden Flugzeugs angeordneten Stirnseite ein Elektromotor 30 angeordnet, dem ein Planetenradgetriebe 32 nachgeschaltet ist, welches mit einer Antriebswelle des Elektromotors 30 verbunden ist. Der Elektromotor 30 und das Planetenradgetriebe 32 sind in einem Gehäuse angeordnet, das mit der Propellernabe 18 verschraubt ist.

Dem Planetenradgetriebe 32 ist ein Kegelrad 34 nachgeschaltet, dessen Drehachse mit der Drehachse des Propellers 12 zusammenfällt und das mit drei Kegelradsegmenten 36 in Eingriff steht, die an den der Drehachse des Propellers 12 zugewandten Stirnseite der Lagerschalen 26 der Propellerblätter 24 angeordnet sind. Die Kegelradsegmente 36 und das Kegelrad 34 bilden eine Kegelradanordnung, über die der Anstellwinkel der Propellerblätter 24 bezüglich der Flug- oder Fahrrichtung des betreffenden Flugzeugs bzw. gegenüber einer Radialebene einstellbar ist, die rechtwinklig zu der Propellerachse steht. Das Kegelrad 34 bildet das Antriebsrad der Kegelradanordnung. Eine Betätigung des Elektromotors 30 führt also über die Kegelradanordnung 38 zu einer Verstellung des Anstellwinkels der Propellerblätter 24.

Um einen maximalen Anstellwinkel der Propellerblätter 24 zu definieren, ist ein erster mechanischer Anschlag 40 für das Kegelrad 34 vorgesehen. Um einen minimalen Anstellwinkel der Propellerblätter 24 zu definieren, weist der Propeller 12 zudem einen zweiten mechanischen Anschlag 42 für das Kegelrad 34 auf.

Der Propeller 12 umfasst ein Gehäuse 44, an dem eine ringförmige Kontaktscheibe 46 befestigt ist, das im Wesentlichen in radialer Richtung ausgerichtet ist. An der Kontaktscheibe 46 sind Schleifringe 48 angeordnet, die umlaufend ausgebildet sind und mit einem flugzeugfesten Bürstenblock 50 in Kontakt stehen, welcher mit dem elektronischen Steuergerät 16 verbunden ist. Auf diese Weise ist eine elektrische Verbindung zwischen dem elektronischen Steuergerät 16 und dem Elektromotor 30 sichergestellt, so dass letzterer in automatisierter Weise oder in einer von dem Piloten des betreffenden Flugzeugs gewünschten Weise angesteuert werden kann.

An der Kontaktscheibe 46 sind konzentrisch zu den Schleifringen 48 weitere Schleifringe 52 angeordnet, die einer nicht näher dargestellten Enteisungseinrichtung des Propellers 12 zugeordnet sind und mit einem flugzeugfest angeordnetem Bürstenblock in Kontakt stehen, welcher mit einer nicht näher dargestellten Stromversorgung verbunden ist.

Weitere, ebenfalls an der Kontaktscheibe angeordnete Schleifringe sind mit einer elektro-mechanischen Sicherheitsanschlageinrichtung 68 verbunden, die einen axial verstellbaren Zapfen 69 aufweist, der im ausgefahrenen aktiven Zustand in eine eine Ausnehmung darstellende Kulisse eingreift, die an einem stirnseitigen Flansch 70 einer Welle 67 ausgebildet ist, welche an das Kegelrad 34 angebunden ist. Die säulenartige Welle 67, die im Zusammenwirken mit dem Zapfen 69 einen Drehstop für das Kegelrad 34 bildet, hat eine Achse, die mit der Drehachse des Propellers 10 zusammenfällt. Durch die Sicherheitsanschlageinrichtung 68 wird, wenn der Zapfen 67 seine Sperrstellung einnimmt und in die Kulisse der Welle 67 eingreift, ein Verstellen des Anstellwinkels der Propellerblätter 24 in eine Bremsstellung verhindert werden. Wenn der Zapfen 69 seine Freigabestellung einnimmt und aus der Kulisse ausgerückt ist, erfolgt durch die Sicherheitsanschlageinrichtung 68 keine Begrenzung des Drehwinkels des Kegelrads 34.

Des Weiteren umfasst der Propeller 12 Anschläge 56, welche gegen eine Federkraft durch die Wirkung einer Fliehkraft aktiviert werden und die verhindern, dass die Propellerblätter 24 hinsichtlich ihres Anstellwinkels in eine Bremsstellung oder Segelstellung verstellt werden, wenn der Propeller 12 mit einer Drehzahl betrieben wird, die oberhalb eines bestimmten Grenzwertes liegt. Insbesondere wäre eine Bremsstellung der Propellerblätter 24 im Flugbetrieb des betreffenden Flugzeugs wegen einer möglichen Überdrehzahl und dem damit verbundenen Widerstand katastrophal. Daher sind bei der vorliegend dargestellten Verstellpropeller-Anordnung zwei unabhängige Einrichtungen vorgesehen, nämlich eine elektronische Einrichtung und eine mechanische Einrichtung. Die mechanische Einrichtung ist von den Anschlägen 56 gebildet, die fliehkraftabhängig aktivierbar ist und verhindert, dass der Anstellwinkel unter einen Wert fällt, der bei einem Anflug auf eine Landebahn erforderlich ist, wenn eine bestimmte Propellerdrehzahl überschritten ist, beispielsweise die niedrigste Drehzahl für den Reisebetrieb des Propellers 12.

Zur Bestimmung der Drehzahl des Propellers 12 weist die Verstellpropeller-Anordnung 10 des Weiteren einen flugzeugfest angeordneten Drehzahlsensor 64 auf.

Wie bereits oben ausgeführt, ist der Elektromotor 30 mit dem elektronischen Steuergerät 16 verbunden. Mittels des elektronischen Steuergeräts 16 können verschiedene Betriebsmodi der elektrischen Verstellpropeller-Anordnung 10 eingestellt werden. In einem ersten Betriebsmodus, in dem ein Kippschalter 58 in eine Stellung "AUTO" gebracht ist, wird der Elektromotor in Abhängigkeit von der Leistung des Antriebsmotors 14 angesteuert, so dass der Anstellwinkel der Propellerblätter 24 automatisch an die Leistung angepasst wird. Damit kann der Propeller 12 auf einer Gleichlaufdrehzahl gehalten werden, die der eingestellten Drehzahl bzw. eingestellten Leistung entspricht, die mit einem Stellknopf 66 des Steuergeräts 16 einstellbar ist. Dies erfolgt durch einen Vergleich der Ist-Drehzahl und der Soll-Drehzahl mittels des Drehzahlsensors 64.

In einem zweiten Betriebsmodus, in dem der Kippschalter 58 in eine Stellung "MANU" gebracht ist, kann der Anstellwinkel der Propellerblätter 24 mittels eines Schalters 60 eingestellt werden. Mittels des Schalters 60 kann der Elektromotor 30 auch so angesteuert werden, dass die Propellerblätter 24 in einen Anstellwinkel gebracht werden, der einer Startstellung entspricht, d. h. der minimal ist. Bei konstanter Drehzahl kann so die Schubkraft der Propelleranordnung 10 verändert werden. Mittels des Schalters 60 kann auch eine Segelstellung der Propellerblätter 24 eingestellt werden, welche bei einem Stillstand des Antriebmotors 14 einen geringstmöglichen Luftwiderstand bietet.

Eine Bremsstellung (Reverse) der Propellerblätter 24, in der die Propellerblätter 24 einen negativen Blattwinkel annehmen und somit einen Bremsschub erzeugen, kann mittels eines externen Tastschalters 62 eingestellt werden, der von dem Piloten des betreffenden Flugzeugs bedienbar ist. Die Bremsstellung der Propellerblätter 24 wird gewählt, wenn das betreffende Flugzeug auf der gewünschten Landebahn aufgesetzt hat und das Flugzeug zum Stillstand gebracht werden soll.

### Bezugszeichenliste

- 10: Verstellpropeller-Anordnung
- 12: Propeller
- 14: Antriebsmotor
- 16: elektronisches Steuergerät
- 18: Propellernabe
- 22: Ausnehmung
- 24: Propellerblatt
- 26: Lagerschale
- 28: Kugellager
- 30: Elektromotor
- 32: Planetenradgetriebe
- 34: Kegelrad
- 36: Kegelradsegment
- 38: Kegelradanordnung
- 40: Anschlag
- 42: Anschlag
- 44: Gehäuse
- 46: Kontaktscheibe
- 48: Schleifringe
- 50: Bürstenblock
- 52: Schleifringe
- 56: Anschläge
- 58: Kippschalter
- 60: Schalter
- 62: Tastschalter
- 64: Drehzahlsensor
- 66: Stellknopf
- 67: Welle
- 68: Sicherheitsanschlageinrichtung
- 69: Zapfen
- 70: Flansch

## Patentansprüche

1. Elektrische Verstellpropeller-Anordnung für ein Luft-, Land- oder Wasserfahrzeug, umfassend mindestens zwei Propellerblätter (24), die zur Einstellung eines Anstellwinkels im Bereich einer Propellernabe (18) drehbar gelagert sind und mittels eines an der Propellernabe (18) angeordneten Elektromotors (30) hinsichtlich ihres Anstellwinkels verstellbar sind, wobei der Elektromotor (30) über eine Kegelradanordnung (38) mit den Propellerblättern (24) gekoppelt ist und der Elektromotor (30) mit einem elektronischen Steuergerät (16) verbunden ist, das zumindest in einem Betriebsmodus in Abhängigkeit von einer eingestellten Leistung oder Drehzahl eines Propellerantriebsmotors (14) den Elektromotor (30) steuert, **dadurch gekennzeichnet, dass** die Kegelradanordnung (38) mit mindestens einem mechanischen Endanschlag (40, 42) versehen ist, der einem minimalen Anstellwinkel oder einem maximalen Anstellwinkel der Propellerblätter (24) zugeordnet ist.

2. Elektrische Verstellpropeller-Anordnung nach Anspruch 1, **dadurch gekennzeichnet, dass** der Kegelradanordnung (38) ein Planetenradgetriebe (32) vorgeschaltet ist.

3. Elektrische Verstellpropeller-Anordnung nach Anspruch 1 oder 2, **dadurch gekennzeichnet, dass** an jedem Propellerblatt (24) ein Kegelradsegment (36) der Kegelradanordnung (38) angeordnet ist, das mit einem Antriebskegelrad (34) in Eingriff steht, das von dem Elektromotor (30) angetrieben ist.

4. Elektrische Verstellpropeller-Anordnung nach einem der Ansprüche 1 bis 3, **dadurch gekennzeichnet, dass** mit dem elektronischen Steuergerät (16) ein Betriebsmodus einstellbar ist, in dem eine manuelle Einstellung des Anstellwinkels der Propellerblätter (24) erfolgt.

5. Elektrische Verstellpropeller-Anordnung nach einem der Ansprüche 1 bis 4, **dadurch gekennzeichnet, dass** mit dem elektronischen Steuergerät (16) ein Betriebsmodus einstellbar ist, in dem der Anstellwinkel der Propellerblätter (24) einer Bremsstellung entspricht.

6. Elektrische Verstellpropeller-Anordnung nach einem der Ansprüche 1 bis 5, **dadurch gekennzeichnet, dass** mit dem elektronischen Steuergerät (16) ein Betriebsmodus einstellbar ist, in dem der Anstellwinkel der Propellerblätter (24) einer Startstellung entspricht.

7. Elektrische Verstellpropeller-Anordnung nach einem der Ansprüche 1 bis 6, **dadurch gekennzeichnet, dass** mit dem elektronischen Steuergerät (16) ein Betriebsmodus einstellbar ist, in dem der Anstellwinkel der Propellerblätter (24) einer Segelstellung entspricht.

8. Elektrische Verstellpropeller-Anordnung nach einem der vorstehenden Ansprüche, **dadurch gekennzeichnet, dass** eine Schleifringanordnung vorgesehen ist, über die der Elektromotor (30) mit dem elektronischen Steuergerät (16) verbunden ist.

9. Elektrische Verstellpropeller-Anordnung nach einem der vorstehenden Ansprüche, **dadurch gekennzeichnet, dass** eine kontaktlose Signalübertragungseinrichtung vorgesehen ist, die den Elektromotor mit dem elektronischen Steuergerät verbindet.

10. Elektrische Verstellpropeller-Anordnung nach Anspruch 9, **dadurch gekennzeichnet, dass** die kontaktlose Signalübertragungseinrichtung induktiv arbeitet.

11. Elektrische Verstellpropeller-Anordnung nach einem der vorstehenden Ansprüche, **gekennzeichnet durch** eine elektro-mechanische Sicherheitsanschlageinrichtung (68), die zwischen einer Freigabestellung und einer Sperrstellung verstellbar ist und in der Sperrstellung den Drehwinkel der Hegelradanordnung begrenzt.

12. Elektrische Verstellpropeller-Anordnung nach Anspruch 11, **dadurch gekennzeichnet, dass** die elektro-mechanische Sicherheitsanschlageinrichtung (68) einen Zapfen (69) umfasst, der in der Sperrstellung in eine Ausnehmung eingreift, die an einem Anbauteil eines Kegelrads (34) der Kegelradanordnung (38) oder an einem Kegelrad der Kegelradanordnung ausgebildet ist.

13. Elektrische Verstellpropeller-Anordnung nach Anspruch 11, **dadurch gekennzeichnet, dass** das Anbauteil eine Welle (67) ist, die an ihrer freien Stirnseite einen Flansch (70) aufweist, an dem die Ausnehmung ausgebildet ist.

## Claims

1. An electric variable pitch propeller assembly for an air, land or water craft, comprising at least two propeller blades (24) mounted so as to be rotatable in the area of a propeller hub (18) for adjusting a pitch and so that their pitch can be varied by means of an electric motor (30) disposed at the propeller hub (18), the electric motor (30) being coupled with the propeller blades (24) via a bevel gear assembly (38) and the electric motor (30) being connected to an electronic control unit (16) which controls the electric motor in one operating mode at the least depending on a set performance or rotational speed of a propeller propulsion motor (14), **characterized in that** the bevel gear assembly (38) is provided with at least one mechanical end stop (40, 42) assigned to a minimum pitch or a maximum pitch of the propeller blades (24).

2. The electric variable pitch propeller assembly according to claim 1, **characterized in that** a planetary gear system (32) is installed upstream of the bevel gear assembly (38).

3. The electric variable pitch propeller assembly according to claim 1 or 2, **characterized in that** a bevel gear segment (36) of the bevel gear assembly (38) is disposed at each propeller blade (24), said bevel gear segment (36) engaging with a propulsion bevel gear (34) driven by the electric motor (30).

4. The electric variable pitch propeller assembly according to one of the claims 1 to 3, **characterized in that** an operating mode in which the pitch of the propeller blades (24) is manually adjustable can be set using the electronic control unit (16).

5. The electric variable pitch propeller assembly according to one of the claims 1 to 4, **characterized in that** an operating mode in which the pitch of the propeller blades (24) corresponds to a brake position can be set using the electronic control unit (16).

6. The electric variable pitch propeller assembly according to one of the claims 1 to 5, **characterized in that** an operating mode in which the pitch of the propeller blades (24) corresponds to a start position can be set using the electronic control unit (16).

7. The electric variable pitch propeller assembly according to one of the claims 1 to 6, **characterized in that** an operating mode in which the pitch of the propeller blades (24) corresponds to a feathering position can be set using the electronic control unit (16).

8. The electric variable pitch propeller assembly according to one of the preceding claims, **characterized in that** a slip ring assembly is provided connecting the electric motor (30) to the electronic control unit (16).

9. The electric variable pitch propeller assembly according to one of the preceding claims, **characterized in that** a contactless signal transmission device is provided connecting the electric motor to the electronic control unit.

10. The electric variable pitch propeller assembly according to claim 9, **characterized in that** the contactless signal transmission device functions inductively.

11. The electric variable pitch propeller assembly according to one of the preceding claims, **characterized by** an electromechanical safety end stop device (68) that can be adjusted between an unlocked position and a locked position and that limits the rotation angle of the bevel gear assembly in the locked position.

12. The electric variable pitch propeller assembly according to claim 11, **characterized in that** the electromechanical safety end stop device (68) comprises a pin (69) engaging into a recess when in the locked position, said recess being disposed on a mounting part of a bevel gear (34) of the bevel gear assembly (38) or on a bevel gear of the bevel gear assembly.

13. The electric variable pitch propeller assembly according to claim 11, **characterized in that** the mounting part is a shaft (67) comprising a flange (70) disposed on its free front end, the recess being formed on said flange (70).

## Revendications

1. Arrangement électrique d'hélice à pas variable pour un véhicule aérien, terrestre ou naval, comprenant au moins deux pales d'hélice (24) qui sont montées de manière tournante dans la zone d'un moyeu d'hélice (18) pour ajuster un angle d'incidence et sont variable relatif à l'angle d'incidence au moyen d'un électromoteur (30) disposé au moyeu d'hélice (18), l'électromoteur (30) étant couplé aux pales d'hélice (24) au moyen d'un arrangement de roue conique (38) et l'électromoteur étant relié à un appareil de commande électronique (16) qui contrôle l'électromoteur (30) au moins dans un mode d'opération dépendant de la puissance ou de la vitesse de rotation d'un moteur d'entraînement d'hélice (14), **caractérisé en ce que** l'arrangement de roue conique (38) comprends au moins une butée finale mécanique (40, 42) associé à un angle d'incidence minimal ou à un angle d'incidence maximal des pales d'hélice (24).

2. Arrangement électrique d'hélice à pas variable selon la revendication 1, **caractérisé en ce qu'**un train épicycloïdal (32) est monté en amont d'arrangement de roue conique (38).

3. Arrangement électrique d'hélice à pas variable selon la revendication 1 ou 2, **caractérisé en ce qu'**un segment de roue conique (36) de l'arrangement de roue conique (38) est disposé sur chaque pale d'hélice (24), ledit segment de roue conique (36) étant engagé avec une roue conique d'entraînement (34) entraînée par l'électromoteur (30).

4. Arrangement électrique d'hélice à pas variable selon l'une quelconque des revendications 1 à 3, **caractérisé en ce qu'**un mode d'opération est ajustable par l'appareil de commande électronique (16), l'angle d'incidence des pales d'hélice (24) étant ajusté manuellement dans ledit mode d'opération.

5. Arrangement électrique d'hélice à pas variable selon l'une quelconque des revendications 1 à 4, **caractérisé en ce qu'**un mode d'opération est ajustable par l'appareil de commande électronique (16), l'angle d'incidence des pales d'hélice (24) correspondant à une position de freinage dans ledit mode d'opération.

6. Arrangement électrique d'hélice à pas variable selon l'une quelconque des revendications 1 à 5, **caractérisé en ce qu'**un mode d'opération est ajustable par l'appareil de commande électronique (16), l'angle d'incidence des pales d'hélice (24) correspondant à une position initiale.

7. Arrangement électrique d'hélice à pas variable selon la revendication 1 à 6, **caractérisé en ce qu'**un mode d'opération est ajustable par l'appareil de commande électronique (16), l'angle d'incidence des pales d'hélice (24) correspondant à une position de voile.

8. Arrangement électrique d'hélice à pas variable selon l'une quelconque des revendications précédentes, **caractérisé en ce qu'**un arrangement de bague collectrice est prévu par laquelle l'électromoteur (30) est relié à l'unité de commande (16).

9. Arrangement électrique d'hélice à pas variable selon l'une quelconque des revendications précédentes, **caractérisé en ce qu'**un dispositif de transmission de signaux sans contact est prévu qui relie l'électromoteur à l'appareil de commande électronique (16).

10. Arrangement électrique d'hélice à pas variable selon la revendication 9, **caractérisé en ce que** le dispositif de transmission de signaux sans contact fonctionne de manière inductive.

11. Arrangement électrique d'hélice à pas variable selon l'une quelconque des revendications précédentes, **caractérisé par** un dispositif électromécanique de butée de sécurité (68) étant variable entre une position de déblocage et une position de blocage et limitant l'angle de rotation de l'arrangement de roue conique dans la position de blocage.

12. Arrangement électrique d'hélice à pas variable selon la revendication 11, **caractérisé en ce que** le dispositif électromécanique de butée de sécurité (68) comprend un tourillon (69) qui, dans la position de blocage, s'engage dans une cavité formée sur une pièce de montage d'une roue conique (34) de l'arrangement de roue conique (38) ou sur une roue conique de l'arrangement des roues coniques.

13. Arrangement électrique d'hélice à pas variable selon la revendication 11, **caractérisé en ce que** la pièce de montage est un arbre (67) comprenant une bride (70), qui est disposée sur son front libre et à laquelle la cavité est formée.
